# FASCICULE DE BREVET EUROPEEN

(11) **EP 3 548 315 B1**
(45) Date de publication et mention de la délivrance du brevet: **30.12.2020**
(21) Numéro de dépôt: 17817800.0
(22) Date de dépôt: 30.11.2017
(51) Int. Cl.: B60C 23/04, G06K 19/077, H01Q 1/22, B29D 30/00

(54) **PROCEDE DE FABRICATION D'UN PATCH EQUIPE D'UN TRANSPONDEUR RADIOFREQUENCE ET PNEUMATIQUE COMPORTANT UN TEL PATCH**
VERFAHREN ZUR HERSTELLUNG EINES FLICKENS MIT EINEM HOCHFREQUENZ-TRANSPONDER UND REIFEN MIT SOLCH EINEM FLICKEN
METHOD FOR MANUFACTURING A PATCH EQUIPPED WITH A RADIOFREQUENCY TRANSPONDER AND TYRE COMPRISING SUCH A PATCH

(30) Priorité: 05.12.2016 FR 1661926
(43) Date de publication de la demande: 09.10.2019
(73) Titulaire: Compagnie Générale des Etablissements Michelin, 63000 Clermont-Ferrand (FR)
(72) Inventeur: NOEL, Sebastien, 63040 Clermont-Ferrand Cedex 9 (FR); CLERGEAT, Jean-Mathieu, 63040 Clermont-Ferrand Cedex 9 (FR); ALDON, Isabelle, 63040 Clermont-Ferrand Cedex 9 (FR); DELORME, Jean-Claude, 63040 Clermont-Ferrand Cedex 9 (FR); CRESS, Ronald, 63040 Clermont-Ferrand Cedex 9 (FR)
(74) Mandataire: Roussy, Delphine
(86) Numéro de dépôt international: PCT/FR2017/053319
(87) Numéro de publication internationale: WO 2018/104621

(56) Documents cités:
- EP-A2- 2 524 818
- DE-A1-102007 043 077
- JP-A- 2010 176 454
- JP-A- 2016 037 236

## Description

### Domaine de l'invention

La présente invention est relative aux patchs caoutchouteux équipés d'un transpondeur radio fréquence destinés à être fixés à la paroi d'un pneumatique, et plus particulièrement à un procédé de fabrication d'un tel patch caoutchouteux.

### État de la technique

Il est avantageux de munir les pneumatiques d'organes électroniques d'identification qui permettent leur identification et leur suivi pendant leur fabrication, leur stockage, l'ensemble de leur vie et aussi lors de leur rechapage.

Les pneumatiques concernés sont les pneumatiques de tous types pour véhicules poids lourds, de tourisme, génie civil, agricole, avion.

De tels organes électriques peuvent être des transpondeurs radiofréquence ou RFID (Radio Frequency IDentification).

La mise en place de ces organes électroniques doit être très précise pour garantir une bonne communication radiofréquence, une durée de vie acceptable des dispositifs ainsi que pour ne pas pénaliser le fonctionnement ou l'endurance des pneumatiques.

Le document JP2010/176454A divulgue un procédé d'obtention d'un patch pour transpondeur radiofréquence. Cependant l'inconvénient d'un tel procédé est la génération de bulles à l'intérieur du patch le fragilisant mécaniquement. L'objetif de l'invention vise aussi à trouver une alternative technique à cet inconvénient.

### Description brève de l'invention

L'invention a pour objet un procédé de fabrication d'un patch caoutchouteux comportant un transpondeur radiofréquence, le patch ayant une première couche et une deuxième couche, comprenant les étapes suivantes :
- choisir un premier moule dont l'empreinte a une géométrie adaptée à la géométrie de la première couche du patch et qui définit à la surface de la première couche une cavité apte à recevoir le transpondeur ;
- mettre en place le matériau caoutchouteux constituant de la première couche du patch dans l'empreinte du premier moule ;
- porter le premier moule à une température et pendant un temps appropriés pour obtenir une première couche vulcanisée avec sur sa surface extérieure une cavité apte à recevoir un transpondeur radiofréquence ;
- choisir un deuxième moule dont l'empreinte a une géométrie adaptée à la géométrie du patch ;
- mettre en place la première couche vulcanisée dans l'empreinte du deuxième moule ;
- mettre en place le transpondeur radiofréquence dans la cavité de la surface de la première couche vulcanisée prévue à cet effet ;
- mettre en place la deuxième couche caoutchouteuse non vulcanisée dans la cavité interne du deuxième moule ;
- porter le deuxième moule à une température et pendant un temps appropriés pour obtenir une deuxième couche caoutchouteuse au moins partiellement vulcanisée ; et
- ressortir du deuxième moule le patch caoutchouteux comportant le transpondeur radiofréquence noyé entre les première et deuxième couches caoutchouteuses.

La préparation de ce patch caoutchouteux en deux opérations permet de disposer avec une grande précision le transpondeur radiofréquence dans le patch et de façon reproductible. Il est ainsi possible de le placer de façon optimale et reproductible sur la paroi d'un pneumatique.

De préférence, l'empreinte du premier moule comporte au moins une nervure pour créer à la surface de la première couche entre la cavité apte à recevoir un transpondeur radiofréquence et l'extrémité extérieure de ladite surface une rainure.

Cette rainure placée en regard d'un évent du moule permet d'évacuer l'air entre les deux mélanges caoutchouteux lors de l'introduction de la deuxième couche dans le deuxième moule ou de la fermeture de ce deuxième moule et ainsi d'éviter des défauts de bullage dans le patch finalisé.

De préférence, l'empreinte du premier moule comporte quatre nervures pour créer à la surface de ladite première couche entre la cavité apte à recevoir un transpondeur radiofréquence et l'extrémité extérieure de ladite surface quatre rainures s'étendant selon la longueur et la largeur de la surface de la première couche.

Ces quatre rainures disposées en regard de quatre évents du moule permettent comme indiqué ci-dessus une évacuation optimisée de l'air.

Le matériau constituant de la première couche peut être un mélange caoutchouteux à base d'élastomères diéniques saturés ou insaturés tels du butyle, du SBR, du polybutadiène, du caoutchouc naturel, du polyisoprène. L'avantage du butyle est de procurer une excellente résistance à l'oxydation. On peut aussi utiliser comme élastomère un EPDM (ethylene propylene diene monomer rubber).

Selon un mode de réalisation avantageux, après avoir mis en place la première couche vulcanisée dans l'empreinte du deuxième moule et avant de mettre en place la deuxième couche caoutchouteuse non vulcanisée dans l'empreinte du deuxième moule, on ravive la surface de la première couche vulcanisée.

On peut raviver cette surface par application d'un film de solvant ou par un traitement plasma ou par le retrait d'un intercalaire introduit à la surface de la première couche avant la vulcanisation de celle-ci.

Selon un autre mode de réalisation, après avoir obtenu la première couche vulcanisée, on met en place cette première couche vulcanisée dans l'empreinte du deuxième moule et on met en place la deuxième couche caoutchouteuse non vulcanisée dans la cavité interne du deuxième moule dans un temps court, de préférence inférieur à une heure.

La mise en place des matériaux caoutchouteux des première et deuxième couches peut être réalisée par injection.

Elle peut aussi être réalisée par surmoulage.

Avantageusement, après avoir démoulé le patch vulcanisé du deuxième moule, on ajoute sur la surface extérieure de la deuxième couche une couche de gomme de liaison non vulcanisée.

Cette couche de gomme de liaison a pour objet d'assurer la liaison avec la surface du pneumatique.

On peut aussi utiliser une couche adhésive à base de polyuréthane, silicone, cyanoacrylate, polyéther silanisé.

L'avantage d'une couche adhésive en polyéther silanisé est de procurer une très large gamme de températures d'utilisation vers les hautes et les basses températures.

Les transpondeurs radiofréquences comprennent usuellement une puce électronique et une antenne rayonnante apte à communiquer avec un lecteur radiofréquence.

En particulier la fréquence de communication du transpondeur radiofréquence est située dans la bande des UHF (acronyme de Ultra Hautes Fréquences) comprise entre 300MHz et 3GHz permettant d'avoir un compromis avantageux entre une petite taille de l'antenne rayonnante, facilement intégrable dans un patch caoutchouteux destiné à une enveloppe pneumatique, et une grande distance de lecture du transponduer radiofréquence, loin de l'enveloppe pneumatique. De façon avantageuse, le transpondeur radiofréquence communique dans la bande étroite de fréquences comprise entre 860 MHz et 960 Mhz et tout spécifiquement sur des bandes très étroites de 860 MHz à 870 MHz et 915 MHz à 925 MHz. En effet, à ces fréquences, les mélanges élastomères classiques de l'enveloppe pneumatique constituent un bon compromis à la propagation des ondes radioélectriques. De plus, ces fréquences sont les plus élevées possibles pour minimiser la taille de l'antenne rayonnante afin de faciliter l'intégration du transpondeur radiofréquence noyé dans un patch caoutchouteux dans l'enveloppe pneumatique.

Selon un premier mode de réalisation, l'antenne rayonnante comportant deux tronçons d'antennes hélicoïdales, la puce électronique est connectée galvaniquement aux deux tronçons d'antennes hélicoïdales.

Selon un autre mode de réalisation, le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique.

L'invention a aussi pour objet un pneumatique comportant un sommet, deux bourrelets et deux flancs, une nappe carcasse ancrée dans lesdits deux bourrelets, tel qu'un patch selon l'un des objets de l'invention est fixé à l'une de ses parois.

Selon un mode de réalisation préférentiel, l'axe de l'antenne rayonnante du patch caoutchouteux est orienté normalement aux renforts de la nappe carcasse.

Selon un mode de réalisation, le patch caoutchouteux peut-être fixé sur un flanc du pneumatique. On évite alors de le placer à proximité immédiate du cordon de centrage ou milieu du flanc du pneumatique, mais plutôt au-dessus ou en-dessous de ce cordon de centrage.

Selon un autre mode de réalisation, le patch caoutchouteux peut être fixé à la surface de la couche intérieure du pneumatique.

Le pneumatique comportant une extrémité radialement intérieure du côté de la cavité interne appelée pointe de gomme, le patch caoutchouteux est avantageusement entièrement placé dans une zone dont l'abscisse curviligne est supérieure à 60 mm et de préférence comprise entre 70 et 110 mm de cette pointe de gomme.

La mise en place d'un tel patch caoutchouteux équipé d'un transpondeur radiofréquence peut intervenir à tout moment de la vie du pneumatique de sa fabrication à son rechapage.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 présente une vue en perspective d'un patch selon l'un des objets de l'invention ;
- la figure 2 présente en vue de dessus la surface de la première couche vulcanisée montrant la cavité d'accueil du transpondeur radio fréquence ;
- la figure 3 présente un agrandissement de la figure 2 avec un transpondeur inséré dans la cavité prévue à cet effet ;
- la figure 4 présente une vue de détail d'une antenne rayonnante d'un transpondeur radiofréquence selon l'invention ;
- la figure 5 présente une vue en perspective de la partie électronique d'un transpondeur radiofréquence dans une configuration où la partie électronique est située à l'intérieur de l'antenne rayonnante ;
- la figure 6 présente une vue en perspective d'un transpondeur radiofréquence selon l'invention dans une configuration où la partie électronique est située à l'intérieur de l'antenne rayonnante ;
- la figure 7 présente une vue en perspective d'un transpondeur radiofréquence selon l'invention dans une configuration où la partie électronique est située à l'extérieur de l'antenne rayonnante ;
- la figure 8 présente une comparaison du seuil d'activation de tags RFID UHF situés à l'intérieur d'un pneumatique ;
- la figure 9 est un synoptique d'un procédé de fabrication d'un patch d'identification comprenant un transpondeur radiofréquence selon l'invention ;
- la figure 10 illustre en coupe axiale un pneumatique comportant un module radiofréquence placé dans sa structure ainsi qu'un module radiofréquence fixé par collage sur sa paroi interne ; et
- la figure 11 illustre en coupe axiale partielle un bourrelet de pneumatique comportant un module radiofréquence fixé par collage sur sa paroi interne.

### Description détaillée de l'invention

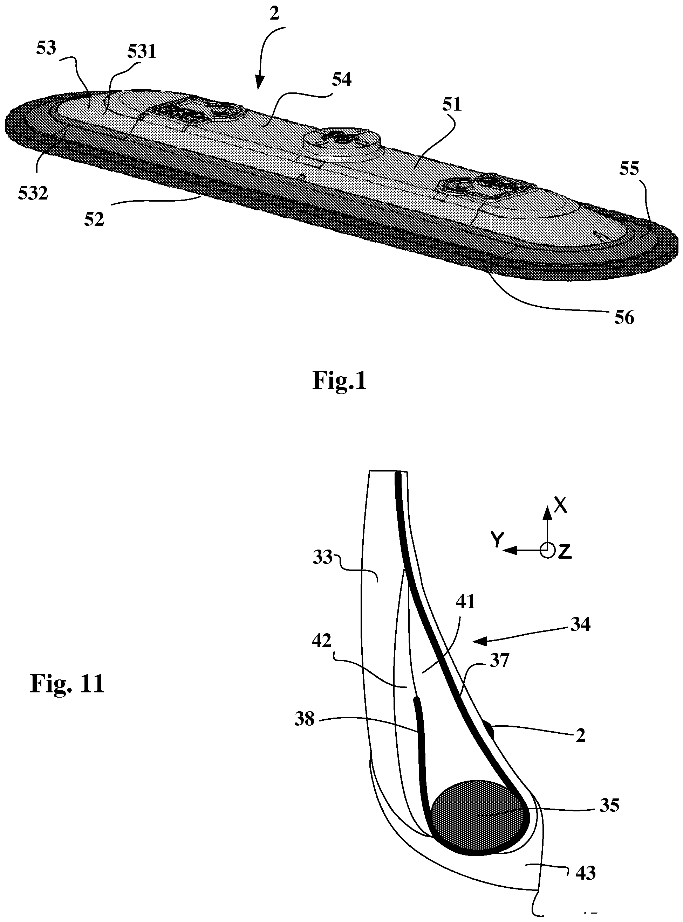

La figure 1 présente une vue en perspective d'un patch 2 selon l'invention.

Ce patch est de forme allongée avec une surface supérieure 51 sensiblement plane, une surface inférieure 52 sensiblement plane et destinée à être fixée à la paroi d'un pneumatique et une jupe 53 reliant les contours extérieurs des surfaces supérieure et inférieure. Les profils de la jupe 53 dans toute section normale sont inclinés relativement à la direction de la surface inférieure selon un angle de l'ordre de 9 à 15 degrés pour garantir une bonne tenue mécanique du patch sur la paroi du pneumatique.

On distingue sur la figure 1 que ce patch 2 est composé de trois parties principales. Une première couche 54 qui comprend la surface supérieure 51 et la partie extérieure 531 de la jupe 53, une deuxième couche 55 qui comprend la partie inférieure 532 de la jupe 53 et une couche 56 de gomme de liaison vulcanisant à froid telle que Gray gum fournie par Tech International. Cette couche de gomme de liaison a une épaisseur de l'ordre de 1 mm.

Les matériaux des première et deuxième couches sont de préférence des isolants électriques avec une constante diélectrique à 915 MHz inférieure à 6,5.

Les mélanges élastomères des première et deuxième couches d'enrobage du transpondeur contiennent 100 pce (parties pour 100 parties d'élastomère en masse) de polymère tel que EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Les mélanges peuvent contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, a un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit des mélanges d'enrobage du transpondeur est de préférence inférieure ou proche de celles des mélanges adjacents de la paroi des pneumatiques où le patch est destiné à être fixé.

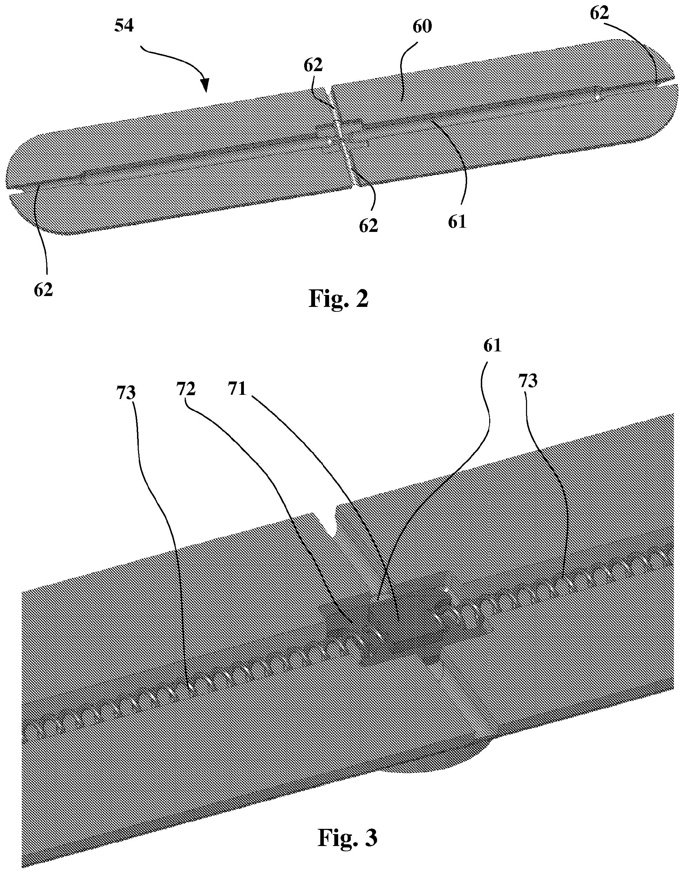

La figure 2 illustre en vue de dessus la première couche 54 telle qu'elle est en sortie du premier moule de fabrication. Cette vue montre la surface 60 de liaison avec la deuxième couche 55. Cette surface comprend une cavité 61 destinée à recevoir le transpondeur radiofréquence 1. Elle comprend aussi quatre rainures 62 placées entre la cavité 61 et l'extérieur du contour de la surface 60. Ces rainures sont destinées à faciliter l'évacuation de l'air lors de la mise en place ou de l'injection du mélange caoutchouteux non vulcanisé de la deuxième couche dans l'empreinte du deuxième moule. Ces quatre rainures sont situées chacune en regard d'un évent du deuxième moule. Cela permet de supprimer la présence de bulles dans le patch 2 après vulcanisation complète.

La figure 3 est un agrandissement de la partie centrale de la figure 2. Cette figure montre la présence d'un transpondeur radiofréquence usuel, tel que décrit dans le document WO 2012/030321 A1. Ce transpondeur comprend une puce électronique 71 fixée sur un support ou PCB (printed circuit board) 72 et galvaniquement connectée à deux demi-antennes 73. Les antennes sont des ressorts hélicoïdaux à âme en fil d'acier.

La cavité 61 est adaptée pour recevoir et placer très précisément le transpondeur radiofréquence. En conséquence, après vulcanisation complète du patch, la position de ce transpondeur est ainsi très précisément connue.

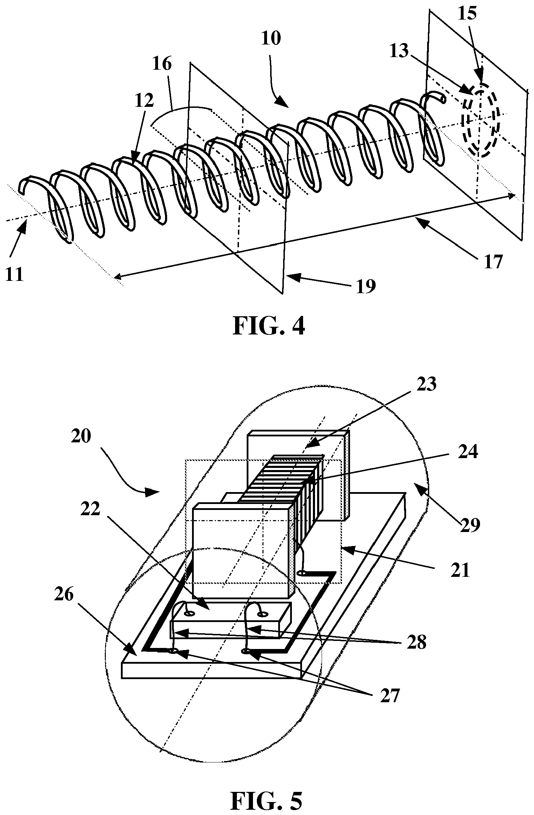

Les figures 4 à 7 présentent un autre mode de réalisation d'un transpondeur radiofréquence.

La figure 4 présente une antenne rayonnante 10 constituée d'un fil en acier 12 qui a été déformé plastiquement afin de former un ressort hélicoïdal présentant un axe de révolution 11. Ce fil d'acier est revêtu d'une couche de conduction en cuivre, aluminium, argent, or, cuivre, étain, zinc ou laiton recouverte si nécessaire d'une couche d'isolation chimique par exemple en laiton, zinc, nickel ou étain pour protéger le mélange caoutchouteux du matériau de la couche de conduction.

La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fréquence de rayonnement et du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.

Le fil d'acier peut être revêtu de ces couches puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en comptant le diamètre du fil. La longueur du ressort 17 correspond ici à la demi-longueur d'onde du signal de transmission du transpondeur radiofréquence 1 dans une masse caoutchouteuse. Ainsi on peut définir un plan médian 19 au ressort hélicoïdal perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

La figure 5 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

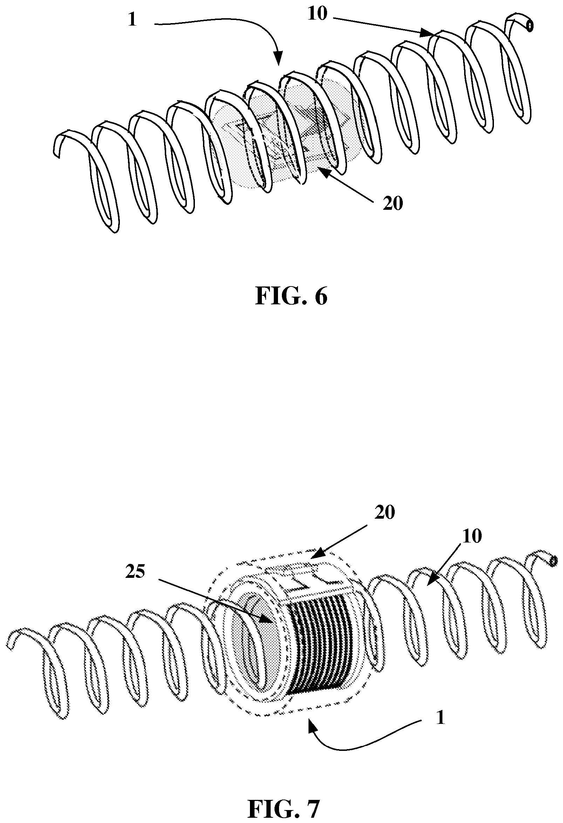

La figure 6 présente un transpondeur radiofréquence 1 dans une configuration où la partie électronique 20 est située à l'intérieur de l'antenne rayonnante 10. La forme géométrique de la partie électronique 10 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian 19 de l'antenne rayonnante 10.

La figure 7 présente un transpondeur radiofréquence 1 dans une configuration où la partie électronique 20 se trouve à l'extérieur de l'antenne rayonnante 10. La forme géométrique de la partie électronique 20 présente une cavité cylindrique 25 dont le diamètre est supérieur ou égal au diamètre extérieur 15 de l'antenne rayonnante 10. L'enfilement de l'antenne rayonnante 10 dans la cavité cylindrique 25 de la partie électronique s'en trouve ainsi facilité. Le plan médian 21 de l'antenne primaire se trouve dans la zone centrale de l'antenne rayonnante et sensiblement dans le plan médian 19 de l'antenne rayonnante 10.

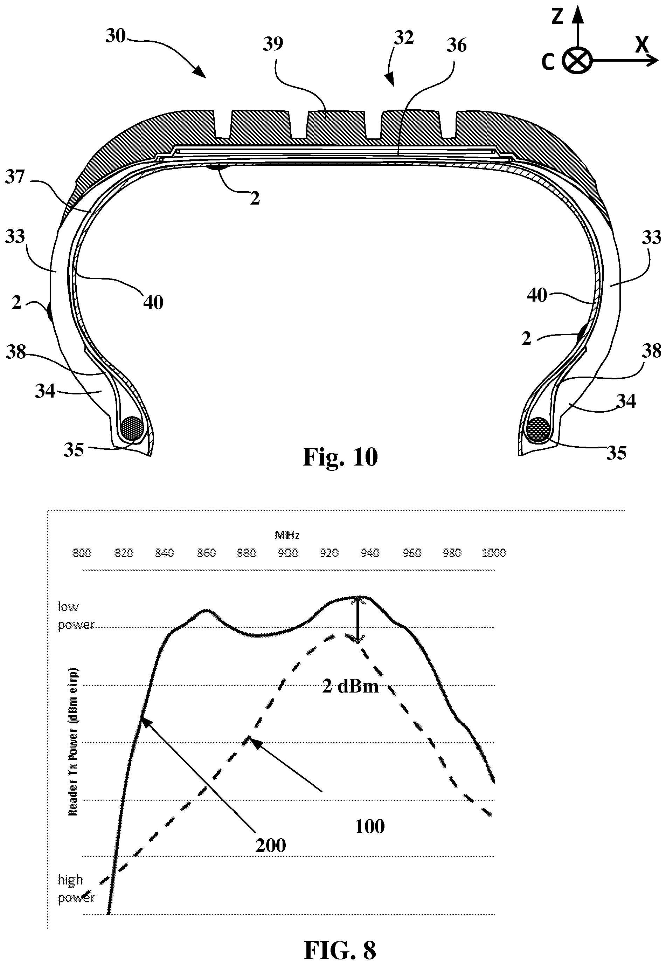

La figure 8 est un graphe de la puissance électrique transmise par un transpondeur radiofréquence situé à l'intérieur d'un pneumatique de marque Michelin XINCITY de dimension 275/70 R22.5 à un lecteur radiofréquence. Le protocole de mesure employé correspond à la norme ISO/IEC 18046-3 et est intitulé « *Identification Electromagnetic Field Threshold and Frequency Peaks* ». Les mesures ont été effectuées pour un balayage en fréquence large et non ponctuellement comme habituellement. L'axe des ordonnées représente la fréquence du signal de communication. L'axe des abscisses est la puissance électromagnétique rayonnée par le lecteur et son antenne exprimée en décibel pour 1 mW (dBm) permettant d'alimenter la puce, c'est-à-dire son seuil d'activation, et par conséquence de recevoir une réponse du tag. Le lecteur est tel que décrit dans l'état de l'art et le Tag RFID de référence tel que décrit dans le document WO 2012030321. La courbe en pointillé 100 représente la réponse d'un transpondeur radiofréquence selon le document cité. La courbe en continu 200 représente la réponse d'un transpondeur selon l'invention dans les même conditions de mesure. On note par exemple à 930 Mhz un gain de trois dBm en faveur du transpondeur radiofréquence selon l'invention ainsi qu'une largeur de bande au global supérieur à l'art antérieur.

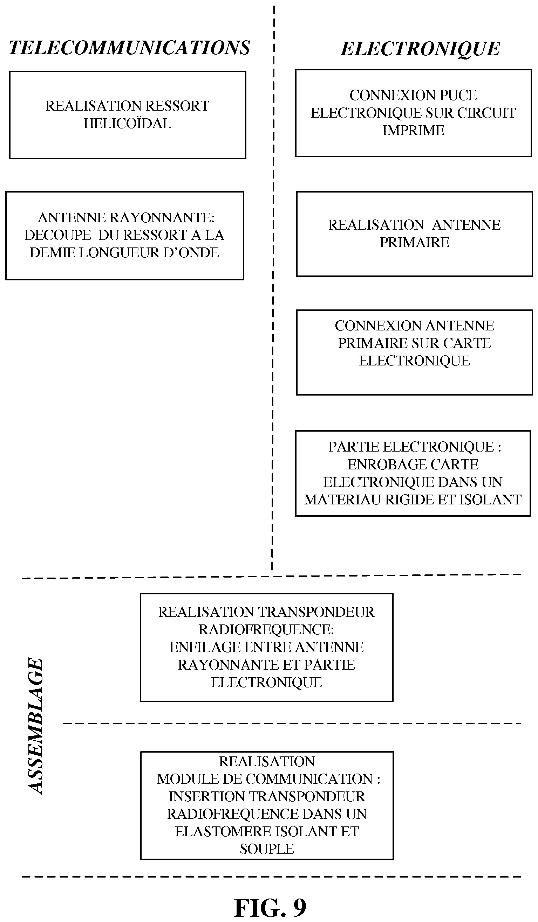

La figure 9 est un synoptique du procédé de fabrication d'un module de communication radiofréquence 2 selon l'invention. L'obtention du module de communication 2 nécessite la fabrication initiale d'un transpondeur radiofréquence 1. Les diverses étapes chronologiques de la fabrication du transpondeur radiofréquence 1 puis celles du patch d'identification 2 sont maintenant décrites. On délimite nettement les étapes liées aux métiers des télécommunications ou de l'électronique de celles de l'assemblage qui peut être réalisé par le manufacturier pneumatique par exemple pour une application sur des pneumatiques.

On distingue trois phases indépendantes et successives.

Dans une première phase, correspondant au métier des télécommunications, on constitue l'antenne rayonnante 10 qui assurera la transmission et la réception des ondes radioélectriques avec le lecteur radiofréquence.

Selon un mode de réalisation spécifique, la première étape consiste à déformer plastiquement le fil d'acier 12 de diamètre externe de 200 micromètres pour former un ressort hélicoïdal à l'aide de moyens industriels adaptés tel qu'un tour à enrouler les ressorts. On obtient ainsi un ressort continu dont le diamètre externe 15 est de l'ordre de 1,5 millimètres qui est petit vis-à-vis de la longueur 17 de l'antenne rayonnante finale comprise entre 35 à 55 millimètres que l'on souhaite, par exemple 50 millimètres. Un traitement thermique peut être appliqué après cette étape de déformation plastique, par exemple un chauffage à une température supérieure à 200°Celsius pendant au moins 30 mn, afin de relaxer les précontraintes dans le ressort hélicoïdal ainsi formé.

La seconde étape consiste à sectionner le ressort hélicoïdal par découpe laser à la longueur souhaitée correspondant à la demi longueur d'onde de la fréquence des signaux radioélectriques de communication en tenant compte de la vitesse de propagation de ces ondes dans un milieu élastomère, soit environ 50 millimètres. La pièce mécanique ainsi obtenue représente l'antenne rayonnante 10 selon l'invention.

Dans une deuxième phase, on réalise la partie électronique 20 du transpondeur radiofréquence 1, qui assurera l'interrogation et la réponse de la puce électronique 22 vers l'antenne rayonnante 10. La transmission d'informations entre l'antenne rayonnante 10 et la partie électronique 20 est réalisée par couplage inductif à l'aide d'une antenne primaire 24.

Ce dispositif électronique, encapsulé dans la masse rigide 29, est composé d'une part d'une puce électronique 22 et d'autre part d'une antenne primaire 24.

Un mode de réalisation de ce dispositif électronique est présenté dans la configuration où la partie électronique 20 est destinée à se situer à l'intérieur de l'antenne rayonnante 10. Dans un mode de réalisation préférentiel, on emploie le procédé leadframe en terme de support électro mécanique à l'antenne primaire 24 et à la puce électronique 22 représentant l'équivalent d'un circuit imprimé 26. Ce procédé est particulièrement bien adapté dans cette configuration en raison de sa facilité de miniaturisation.

La première étape consiste à composer la carte électronique. Pour cela on fixe, en premier lieu, sur la grille ou leadframe la puce électronique 22 à l'aide d'une colle conductrice par exemple la H20E de la marque Tedella. Et le câblage de la puce est effectué par la technique de wire-bonding, c'est à-dire la réalisation d'un pont électrique par l'intermédiaire, par exemple, de fils 28 en or de diamètre 20 micromètres entre la puce électronique 22 et le circuit imprimé 26 représenté par la grille. On peut alors mesurer l'impédance électrique de la carte électronique aux points de fixation de l'antenne primaire 24 sur la grille à l'aide d'un appareil électrique adaptée comme un impédancemètre.

La deuxième étape consiste à réaliser l'antenne primaire 24. Ici cette antenne sera constituée d'une bobine à spires circulaires construite directement sur la grille (lead frame) par la technologie du câblage de fil (wire-bonding). Pour cela, un fil d'or de 20 micromètre de diamètre sera employé, on aurait pu employer aussi du fil d'aluminium ou de cuivre palladium, pour réaliser les demi-spires de la bobine sur la face verso de la grille. Le diamètre de la demi-spire est de 400 micromètres, on emploie la technique des ultrasons classique dans l'industrie des semi-conducteurs pour connecter électriquement les fils d'or sur la grille. Ensuite sur la face recto de la grille, on réalise l'autre demi spire afin d'obtenir une bobine cylindrique à 15 spires de diamètre 400 micromètres.

Le nombre de spires de l'antenne primaire 24 est déterminé de telle sorte que l'impédance électrique de l'antenne primaire 24 soit adaptée à l'impédance électrique de la carte électronique comprenant au moins le circuit imprimé 26 représenté par la grille et la puce électronique 22. Dans notre cas, l'impédance électrique de la puce électronique 22 seule est un nombre complexe ayant une valeur par exemple de (10-j^{∗}150) ohms. Ainsi une bobine de 15 spires de diamètre 400 micromètres correspond à une bonne adaptation de l'impédance électrique de la carte électronique construite sur une grille de connexions en cuivre.

La dernière étape de réalisation de la partie électronique 20 consiste à encapsuler la grille et les composants qui lui sont connectés, à l'aide d'une résine époxy haute température, dans une masse rigide 29. Pour cela, la technologie du globtop sera employée. Elle consiste à déposer la résine à l'état liquide, comme la MONOPOX GE780 de la marque DELO, à l'aide de moyens d'aspiration et d'expiration telle qu'une seringue. L'opération se déroule dans un environnement classique de l'industrie micro électronique telle une salle blanche. Ensuite, une polymérisation de la résine liquide est effectuée par l'intermédiaire d'une lampe à rayons ultraviolets générant une température d'au moins 130°Celsius accélérant la polymérisation de la résine pour atteindre un temps de réaction chimique de l'ordre de la minute. La masse rigide 29 ici de cette polymérisation forme une capsule enfermant la grille et les composants électroniques et représente la carte électronique du transpondeur radiofréquence 1.

La troisième phase de la réalisation du transpondeur radiofréquence 1 consiste à assembler l'antenne rayonnante 10 réalisée à la première étape à la partie électronique 20 réalisée à la deuxième étape.

Dans la première configuration où l'antenne primaire 24 est destinée à se situer à l'intérieur de l'antenne rayonnante 10, on procède de la manière suivante.

Tout d'abord on saisit à l'aide d'une pince à long bec adaptée la partie électronique 20 inscrit dans un cylindre dans le diamètre est inférieur ou égal au diamètre interne 13 de l'antenne rayonnante 10 réalisée à la première étape, soit de l'ordre du millimètre.

On insère la partie électronique 20 à l'intérieur de l'antenne rayonnante 10 en positionnant l'axe de symétrie 23 de l'antenne primaire dans la direction de l'axe de révolution 11 de l'antenne rayonnante 10. De plus, on enfonce la partie électronique 20 dans l'antenne rayonnante 10 jusqu'à ce que le plan médian 21 de l'antenne primaire coïncide avec le plan médian 19 de l'antenne rayonnante. Ensuite on libère la partie électronique 20 de la pince à long bec et retire délicatement la pince de l'intérieur de l'antenne rayonnante 10.

Un auto centrage, parallélisme des axes et position relative des plans médians entre l'antenne rayonnante 10 et l'antenne primaire 24, est ainsi réalisé favorable à un couplage inductif de qualité entre les deux antennes.

Selon un mode de réalisation optimisée, on emploie une goupille fendue comme pièce facilitant le positionnement entre l'antenne rayonnante10 et l'antenne primaire 24. Il s'agit par exemple d'une goupille tubulaire en matériau souple et isolant électriquement comme par exemple un mélange caoutchouteux. Cette goupille présente une fente sur la longueur du tube et des orifices cylindrique situés dans l'épaisseur sur une de ses extrémités suivant l'axe de la goupille. Idéalement, la goupille est munie d'une marque sur la face externe qui identifie le plan médian 21 de l'antenne primaire lorsque la partie électronique 20 est logée à l'intérieur de la goupille. Ce tube possède des diamètres intérieur et extérieur qui correspondent respectivement au diamètre extérieur circonscrit à la partie électronique 20 et au diamètre intérieur 13, parfaitement ajusté, de l'antenne rayonnante 10. On insère la partie électronique 20 à l'intérieur du tube fendu en écartant la goupille au niveau de la fente. La partie électronique 20 est mise en place de telle sorte que l'axe de symétrie 23 de l'antenne primaire 24 soit parallèle à l'axe de la goupille et que le plan médian 21 de l'antenne primaire 24 soit confondu avec la marque sur la face externe de la goupille.

Ensuite la goupille, préalablement saisie par une pince à longue portée dont chaque extrémité s'est logée dans les orifices cylindriques de la goupille, est guidée à l'aide de la pince à l'intérieur de l'antenne rayonnante 10 afin que, d'une part la marque sur la face externe de la goupille coïncide avec le plan médian 19 de l'antenne rayonnante, et d'autre part l'axe de la goupille soit parallèle à l'axe de révolution 11 de l'antenne rayonnante 10. La fermeture de la pince à longue portée, resserre la fente de la goupille facilitant l'introduction de la goupille dans la l'antenne rayonnante 10. Une fois en place, on ouvre la pince à longue portée, rendant sa forme initiale à la goupille qui devient solidaire de l'antenne rayonnante 10. Il suffit de retirer les extrémités de la pince des orifices de la goupille et de retirer délicatement la pince.

L'ensemble ainsi constitué représente un transpondeur radiofréquence 1 qui peut très facilement remplacer un transpondeur usuel 70 lors de la préparation d'un patch 2 comme précédemment indiqué. Il suffit bien entendu d'adapter la cavité 61 aux dimensions du transpondeur 1.

La figure 10 présente en coupe axiale un pneumatique comportant fixé à sa paroi interne un patch.

La figure 10 indique les directions axiale X, circonférentielle C et radiale Z ainsi que le plan médian EP (plan perpendiculaire à l'axe de rotation du pneumatique qui est situé à mi-distance des deux bourrelets 4 et passe par le milieu de l'armature de sommet 6).

Ce pneumatique 30 comporte un sommet 32 renforcé par une armature de sommet ou ceinture 36, deux flancs 33 et deux bourrelets 34, chacun de ces bourrelets 34 étant renforcé avec une tringle 35. L'armature de sommet 36 est surmontée radialement extérieurement d'une bande de roulement caoutchouteuse 39. Une armature de carcasse 37 est enroulée autour des deux tringles 35 dans chaque bourrelet 34, le retournement 38 de cette armature 37 étant par exemple disposé vers l'extérieur du pneumatique 30. L'armature de carcasse 37 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 40 (en anglais « inner liner ») s'étend d'un bourrelet à l'autre radialement intérieurement relativement à l'armature de carcasse 37.

Le pneumatique 30 comporte deux patchs 2 pré-vulcanisé et fixé, le premier sur le flanc extérieur du pneumatique et l'autre sur la gomme intérieure 40 du pneumatique au moyen d'une couche de gomme de liaison usuelle vulcanisant à froid, telle que Gray-Gum fournie par Tech International. Ce module de communication a été fixé après la fabrication du pneumatique, par exemple en préparation d'opérations de rechapage de la bande de roulement du pneumatique.

On peut aussi utiliser un adhésif à base de polyéther silanisé.

De tels adhésifs sont à base de polyoxypropylènes fonctionnalisés méthoxysilane en bout de chaîne :

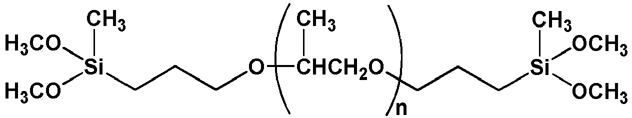

Un polyoxypropylène de haut poids est d'abord fonctionnalisé avec un groupement allyle à chacune des deux extrémités de la chaîne puis est hydrosilylé pour obtenir en final un polyéther téléchélique fonctionnel méthyldiméthoxysilane.

Ces polymères combinent assez bien les avantages des silicones (tenue au vieillissement) et des polyuréthannes (cohésion du matériau). Ils sont exempts d'isocyanate et de solvant.

Une formulation typique d'adhésif ou mastic à base de polyéther silanisé peut contenir en plus du polyéther fonctionnel: charge(s), plastifiant, pigment, promoteur d'adhésion, agent de déshydratation, catalyseur, agent thixotrope et optionnellement antioxydant et/ou stabilisant UV suivant l'usage.

Un exemple de formulation (Kaneka DKB-5 sealant) **⁽¹⁾** est présenté dans le tableau suivant :

| ***Type de composant*** | ***Nature du composant*** | ***pce*** | ***pcm*** |
|---|---|---|---|
| Polyéther silanisé (STPE) | S303H (Kaneka Corporation) | 100 | 33 |
| Charge | Carbonate de calcium (CaCO3) | 120 | 40 |
| Plastifiant | Di-iso-undécyl-phtalate (DIUP) | 50 | 16.6 |
| Pigment | Oxyde de titane blanc (TiO2) | 20 | 6.6 |
| Agent thixotrope | Cire polyamide ou Silice pyrogénée | 5 | 1.7 |
| Agent de déshydratation | Vinyltriméthoxysilane | 2 | 0.7 |
| Promoteur d'adhésion | N-2-aminoéthyl-3-aminopropyltriméthoxysilane | 3 | 1 |
| Catalyseur durcisseur | Bis-acétylacétonate de dibutyl-étain | 1.5 | 0.5 |
| ***Total*** | | ***301.5*** | ***100*** |

| | | | |
|---|---|---|---|
| **⁽¹⁾** CABOT - CAB-O-SIL TS-720 in MS-Polymer Sealants (2010) pce : partie en poids pour 100 parties d'élastomère, ici le polyéther silanisé ; pcm : pourcentage en poids relativement à 100 g d'adhésif. | | | |

Après application de l'adhésif à base de polyéther silanisé (Silyl-Terminated PolyEther ou STPE), celui-ci polymérise avec l'humidité de l'air **⁽²⁾**.

Cette polymérisation s'effectue en deux étapes :
Étape 1 : Conversion par hydrolyse du méthoxysilane en silanol : 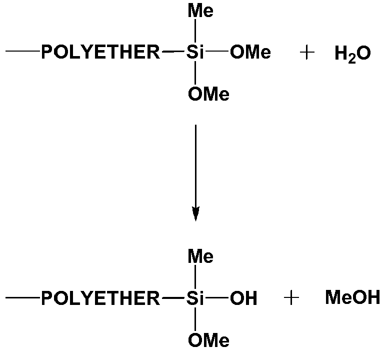
Étape 2 : Condensation du silanol avec un méthoxysilane pour former un pont siloxane : 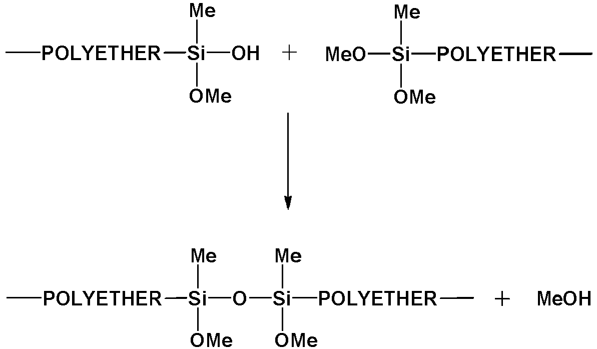 **⁽²⁾** CRAY VALLEY - One-component Moisture Curing Methoxysilane Sealants (2001)

Des adhésifs à base de polyéther silanisé sont disponibles commercialement notamment auprès de la société Bostik : BOSTIK-Simson-ISR-7003, c'est un adhésif mono-composant.

L'utilisation d'un tel adhésif a pour avantages de n'utiliser aucun solvant ni aucune dissolution et d'avoir une cinétique de réticulation beaucoup plus rapide qu'une couche de gomme de liaison usuelle vulcanisant à froid, telle que Gray-Gum fournie par Tech International, tout en ayant une excellente résistance mécanique. Cette gomme de liaison nécessite l'usage d'une dissolution (« vulcanization chemical fluid ») qui comporte un ultra accélérateur de vulcanisation et qui est à appliquer après la préparation des surfaces à coller.

La figure 11 présente un bourrelet 34 de pneumatique de type poids lourd radial comportant un patch 2 dans une position particulièrement intéressante. Ce bourrelet comprend une nappe carcasse 37 avec un retournement 38, une tringle 35, deux gommes de bourrage 41 et 42 disposées radialement extérieurement relativement à la tringle 35 et un protecteur 43 placé radialement sous la tringle 35 et apte à venir en contact avec un siège de jante. Ce protecteur a comme extrémité radialement intérieure et axialement intérieure le bord appelé pointe de gomme 45.

Le patch radiofréquence 2 est alors, lors d'une opération de rechapage, avantageusement entièrement placé dans une zone dont l'abscisse curviligne est supérieure à 60 mm et de préférence comprise entre 70 et 110 mm de cette pointe de gomme 45. Le patch a son axe longitudinal orienté normalement aux renforts de la nappe carcasse radiale 37. Par entièrement placé dans la zone identifiée, on entend que la lèvre inférieure du patch 2 est placée à plus de 60 mm de la pointe de gomme. Compte tenu du procédé de fabrication du patch, on sait alors précisément où se situe le transpondeur et son orientation.

## Revendications

1. Procédé de fabrication d'un patch caoutchouteux comportant un transpondeur radiofréquence, le patch ayant une première couche (54) et une deuxième couche (55), comprenant les étapes suivantes :
- choisir un premier moule dont l'empreinte a une géométrie adaptée à la géométrie de la première couche du patch et qui définit à la surface de ladite première couche une cavité apte à recevoir ledit transpondeur ;
- mettre en place le matériau caoutchouteux constituant de la première couche du patch dans l'empreinte dudit moule ;
- porter le premier moule à une température et pendant un temps appropriés pour obtenir une première couche vulcanisée avec sur sa surface extérieure une cavité apte à recevoir un transpondeur radiofréquence (71, 72, 73);
- choisir un deuxième moule dont l'empreinte a une géométrie adaptée à la géométrie dudit patch ;
- mettre en place ladite première couche vulcanisée dans l'empreinte dudit deuxième moule ;
- mettre en place le transpondeur radiofréquence dans la cavité de la surface de la première couche vulcanisée prévue à cet effet ;
- mettre en place la deuxième couche caoutchouteuse non vulcanisée dans la cavité interne dudit deuxième moule ;
- porter le deuxième moule à une température et pendant un temps appropriés pour obtenir une deuxième couche caoutchouteuse au moins partiellement vulcanisée ; et
- ressortir du deuxième moule le patch caoutchouteux comportant le transpondeur radiofréquence noyé entre les première et deuxième couches caoutchouteuses ;
**caractérisé en ce que** l'empreinte du premier moule comporte au moins une nervure pour créer à la surface de ladite première couche entre la cavité apte à recevoir un transpondeur radiofréquence et l'extrémité extérieure de ladite surface une rainure (62).

2. Procédé selon la revendication1, dans lequel l'empreinte du premier moule comporte quatre nervures pour créer à la surface de ladite première couche entre la cavité apte à recevoir un transpondeur radiofréquence et l'extrémité extérieure de ladite surface quatre rainures (62) s'étendant selon la longueur et la largeur de ladite surface de ladite première couche.

3. Procédé selon l'une quelconque des revendications précédentes, dans lequel le matériau constituant de la première couche et ou de la deuxième couche est un mélange caoutchouteux à base d'élastomères diéniques saturés ou insaturés tels du butyle, du SBR, du polybutadiène, du caoutchouc naturel, du polyisoprène.

4. Procédé selon la revendication3, dans lequel le matériau constituant de la première couche est un mélange caoutchouteux à base de caourchouc butyle.

5. Procédé selon l'une quelconque des revendications précédentes, dans lequel le matériau constituant de la deuxième couche est à base d'un élastomère diénique insaturé.

6. Procédé selon l'une quelconque des revendications 1 à 2, dans lequel le matériau des première et deuxième couches est à base d'un EPDM.

7. Procédé selon l'une quelconque des revendications précédentes, dans lequel, après avoir mis en place ladite première couche vulcanisée dans l'empreinte dudit deuxième moule et avant de mettre en place la deuxième couche caoutchouteuse non vulcanisée dans la cavité interne dudit deuxième moule, on ravive la surface de ladite première couche vulcanisée.

8. Procédé selon la revendication 7, dans lequel on ravive la surface par application d'un film de solvant ou par un traitement plasma ou par le retrait d'un intercalaire introduit à la surface de la première couche avant la vulcanisation de celle-ci.

9. Procédé selon l'une quelconque des revendications 1 à 5, dans lequel, après avoir obtenu ladite première couche vulcanisée, on met en place ladite première couche vulcanisée dans l'empreinte dudit deuxième moule et on met en place la deuxième couche caoutchouteuse non vulcanisée dans la cavité interne dudit deuxième moule dans un temps court, de préférence inférieur à une heure.

10. Procédé selon l'une quelconque des revendications précédentes, dans lequel la mise en place des matériaux caoutchouteux des première et deuxième couches est réalisée par injection.

11. Procédé selon l'une quelconque des revendications 1 à 10, dans lequel la mise en place des matériaux caoutchouteux des première et deuxième couches est réalisée par surmoulage.

12. Procédé selon l'une quelconque des revendications précédentes, dans lequel, après avoir démoulé le patch vulcanisé, on ajoute sur la surface extérieure de la deuxième couche une couche de gomme de liaison non vulcanisée.

13. Procédé selon l'une quelconque des revendications 1 à 11, dans lequel, après avoir démoulé le patch vulcanisé, on ajoute sur la surface extérieure de la deuxième couche une couche adhésive à base de polyéther silanisé.

14. Patch caoutchouteux réalisé selon l'une quelconque des revendications précédentes, dans lequel le transpondeur radiofréquence comprend une puce électronique (71) et une antenne rayonnante (73) apte à communiquer avec un lecteur radiofréquence.

15. Patch selon la revendication 14, dans lequel, ladite antenne rayonnante comportant deux tronçons d'antennes hélicoïdales, ladite puce électronique est connectée galvaniquement audits deux tronçons d'antennes hélicoïdales.

16. Patch selon la revendication 14, dans lequel le transpondeur radiofréquence comprend en plus une antenne primaire connectée électriquement à la puce électronique, dans lequel l'antenne primaire (24) est couplée inductivement à l'antenne rayonnante (10), et dans lequel l'antenne rayonnante (10) est une antenne dipôle constituée d'un ressort hélicoïdal mono brin.

17. Pneumatique comportant un sommet, deux bourrelets et deux flancs, une nappe carcasse ancrée dans lesdits deux bourrelets, **caractérisé en ce qu'**un patch selon l'une quelconque des revendications 14 à 16 est fixé à l'une des parois dudit pneumatique.

18. Pneumatique selon la revendication 17, dans lequel l'axe de l'antenne rayonnante du patch caoutchouteux est orienté normalement aux renforts de la nappe carcasse.

19. Pneumatique selon la revendication 17, dans lequel ledit patch caoutchouteux est fixé sur un flanc dudit pneumatique.

20. Pneumatique selon la revendication 17, dans lequel, le pneumatique comportant une couche intérieure, ledit patch caoutchouteux est fixé à la surface de ladite couche intérieure.

21. Pneumatique selon la revendication 20, ledit pneumatique comportant une pointe de gomme avec une extrémité du côté de la cavité interne du pneumatique, ledit patch caoutchouteux est disposé à une distance dont l'abscisse curviligne est supérieure à 60 mm et de préférence entre 70 mm et 110 mm de ladite extrémité de la pointe de gomme.

## Patentansprüche

1. Verfahren zur Herstellung eines Kautschukflickens, der einen Hochfrequenz-Transponder umfasst, wobei der Flicken eine erste Schicht (54) und eine zweite Schicht (55) aufweist, die folgenden Schritte umfassend:
- Wählen eines ersten Formwerkzeugs, dessen Formhohlraum eine an die Geometrie der ersten Schicht des Flickens angepasste Geometrie aufweist und das an der Oberfläche der ersten Schicht einen Hohlraum definiert, der geeignet ist, den Transponder aufzunehmen;
- Anbringen des Kautschukmaterials, aus dem die erste Schicht des Flickens besteht, im Formhohlraum des Formwerkzeugs;
- Bringen des ersten Formwerkzeugs eine geeignete Zeit lang auf eine geeignete Temperatur, um eine vulkanisierte erste Schicht mit einem Hohlraum auf ihrer Außenfläche, der geeignet ist, einen Hochfrequenz-Transponder (71, 72, 73) aufzunehmen, zu erhalten;
- Wählen eines zweiten Formwerkzeugs, dessen Formhohlraum eine an die Geometrie des Flickens angepasste Geometrie aufweist;
- Anbringen der vulkanisierten ersten Schicht im Formhohlraum des zweiten Formwerkzeugs;
- Anbringen des Hochfrequenz-Transponders im Hohlraum im dazu vorgesehenen Hohlraum der Oberfläche der vulkanisierten ersten Schicht;
- Anbringen der nicht vulkanisierten zweiten Kautschukschicht im inneren Hohlraum des zweiten Formwerkzeugs;
- Bringen des zweiten Formwerkzeugs eine geeignete Zeit lang auf eine geeignete Temperatur, um eine wenigstens teilweise vulkanisierte zweite Kautschukschicht zu erhalten; und
- Entnehmen des Kautschukflickens, der den zwischen der ersten und der zweiten Kautschukschicht eingebetteten Hochfrequenz-Transponder umfasst, aus dem zweiten Formwerkzeug;
**dadurch gekennzeichnet, dass** der Formhohlraum des ersten Formwerkzeugs wenigstens eine Rippe aufweist, um an der Oberfläche der ersten Schicht zwischen dem Hohlraum, der geeignet ist, einen Hochfrequenz-Transponder aufzunehmen, und dem äußeren Ende der Oberfläche eine Nut (62) zu erzeugen.

2. Verfahren nach Anspruch 1, wobei der Formhohlraum des ersten Formwerkzeugs vier Rippen aufweist, um an der Oberfläche der ersten Schicht zwischen dem Hohlraum, der geeignet ist, einen Hochfrequenz-Transponder aufzunehmen, und dem äußeren Ende der Oberfläche vier Nuten (62) zu erzeugen, die sich in Längen- und Breitenrichtung der Oberfläche der ersten Schicht erstrecken.

3. Verfahren nach einem der vorhergehenden Ansprüche, wobei das Material, aus dem die erste Schicht und/oder die zweite Schicht bestehen, eine Kautschukmischung auf der Basis von gesättigten oder ungesättigten Dienelastomeren ist, wie Butyl, SBR, Polybutadien, Naturkautschuk, Polyisopren.

4. Verfahren nach Anspruch 3, wobei das Material, aus dem die erste Schicht besteht, eine Kautschukmischung auf der Basis von Butylkautschuk ist.

5. Verfahren nach einem der vorhergehenden Ansprüche, wobei das Material, aus dem die zweite Schicht besteht, eines auf der Basis eines ungesättigten Dienelastomers ist.

6. Verfahren nach einem der Ansprüche 1 bis 2, wobei das Material der ersten und der zweiten Schicht eines auf der Basis eines EPDM ist.

7. Verfahren nach einem der vorhergehenden Ansprüche, wobei, nachdem die vulkanisierte erste Schicht im Formhohlraum des zweiten Formwerkzeugs angebracht worden ist und bevor die nicht vulkanisierte zweite Kautschukschicht im inneren Hohlraum des zweiten Formwerkzeugs angebracht wird, die Oberfläche der vulkanisierten ersten Schicht aufgefrischt wird.

8. Verfahren nach Anspruch 7, wobei die Oberfläche durch Aufbringung eines Lösungsmittelfilms oder durch eine Plasmabehandlung oder durch das Entfernen einer Zwischenlage, die an der Oberfläche der ersten Schicht vor der Vulkanisation derselben eingeführt wurde, aufgefrischt wird.

9. Verfahren nach einem der Ansprüche 1 bis 5, wobei, nachdem die vulkanisierte erste Schicht erhalten wurde, innerhalb einer kurzen Zeit, vorzugsweise von weniger als einer Stunde, die vulkanisierte erste Schicht im Formhohlraum des zweiten Formwerkzeugs angebracht wird und die nicht vulkanisierte zweite Kautschukschicht im inneren Hohlraum des zweiten Formwerkzeugs angebracht wird.

10. Verfahren nach einem der vorhergehenden Ansprüche, wobei die Anbringung der Kautschukmaterialien der ersten und der zweiten Schicht durch Einspritzen durchgeführt wird.

11. Verfahren nach einem der Ansprüche 1 bis 10, wobei die Anbringung der Kautschukmaterialien der ersten und der zweiten Schicht durch Umspritzen durchgeführt wird.

12. Verfahren nach einem der vorhergehenden Ansprüche, wobei, nachdem der vulkanisierte Flicken entformt wurde, auf der Außenfläche der zweiten Schicht eine nicht vulkanisierte Schicht aus Verbindungsgummi hinzugefügt wird.

13. Verfahren nach einem der Ansprüche 1 bis 11, wobei, nachdem der vulkanisierte Flicken entformt wurde, auf der Außenfläche der zweiten Schicht eine Klebeschicht auf der Basis von silanisiertem Polyether hinzugefügt wird.

14. Kautschukflicken, welcher nach einem der vorhergehenden Ansprüche hergestellt ist, wobei der Hochfrequenz-Transponder einen Mikrochip (71) und eine strahlende Antenne (73), die geeignet ist, mit einem Hochfrequenzleser zu kommunizieren, umfasst.

15. Flicken nach Anspruch 14, wobei, wenn die strahlende Antenne zwei Abschnitte von Spiralantennen aufweist, der Mikrochip mit den zwei Abschnitten von Spiralantennen galvanisch verbunden ist.

16. Flicken nach Anspruch 14, wobei der Hochfrequenz-Transponder außerdem eine primäre Antenne umfasst, die mit dem Mikrochip elektrisch verbunden ist, wobei die primäre Antenne (24) mit der strahlenden Antenne (10) induktiv gekoppelt ist, und wobei die strahlende Antenne (10) eine Dipolantenne ist, die aus einer einfachgewickelten Spiralfeder besteht.

17. Reifen, welcher einen Scheitel, zwei Wülste und zwei Seitenwände aufweist, wobei eine Karkassenlage in den zwei Wülsten verankert ist, **dadurch gekennzeichnet, dass** ein Flicken nach einem der Ansprüche 14 bis 16 an einer der Wände des Reifens befestigt ist.

18. Reifen nach Anspruch 17, wobei die Achse der strahlenden Antenne des Kautschukflickens senkrecht zu den Festigkeitsträgern der Karkassenlage ausgerichtet ist.

19. Reifen nach Anspruch 17, wobei der Kautschukflicken an einer Seitenwand des Reifens befestigt ist.

20. Reifen nach Anspruch 17, wobei, wenn der Reifen eine innere Schicht umfasst, der Kautschukflicken an der Oberfläche der inneren Schicht befestigt ist.

21. Reifen nach Anspruch 20, wobei der Reifen eine Wulstzehe mit einem Ende auf der Seite des inneren Hohlraums des Reifens aufweist, wobei der Kautschukflicken in einem Abstand, dessen krummlinige Abszisse größer als 60 mm ist und vorzugsweise zwischen 70 mm und 110 mm liegt, von dem Ende der Wulstzehe angeordnet ist.

## Claims

1. Process for manufacturing a rubber patch comprising a radiofrequency transponder, the patch having a first layer (54) and a second layer (55), comprising the following steps:
- choosing a first mould the impression of which has a geometry adapted to the geometry of the first layer of the patch and that defines on the surface of said first layer a cavity able to receive said transponder;
- placing the rubber material forming the first layer of the patch in the impression of said mould;
- raising the first mould to a temperature and for a time suitable for obtaining a vulcanized first layer with on its exterior surface a cavity able to receive a radiofrequency transponder (71, 72, 73);
- choosing a second mould the impression of which has a geometry adapted to the geometry of said patch;
- placing said vulcanized first layer in the impression of said second mould;
- placing the radiofrequency transponder in the cavity of the surface of the vulcanized first layer provided to this end;
- placing the non-vulcanized rubber second layer in the internal cavity of said second mould;
- raising the second mould to a temperature and for a time suitable for obtaining an at least partially vulcanized rubber second layer; and
- removing from the second mould the rubber patch comprising the radiofrequency transponder embedded between the first and second rubber layers;
**characterized in that** the impression of the first mould comprises at least one rib in order to create in the surface of said first layer between the cavity able to receive a radiofrequency transponder and the exterior end of said surface a groove (62).

2. Process according to Claim 1, wherein the impression of the first mould comprises four ribs in order to create in the surface of said first layer between the cavity able to receive a radiofrequency transponder and the exterior end of said surface four grooves (62) extending the length and width of said surface of said first layer.

3. Process according to either one of the preceding claims, wherein the material from which the first layer and/or the second layer is made is a rubber blend based on unsaturated or saturated diene elastomers such as butyl, SBR, polybutadiene, natural rubber, polyisoprene.

4. Process according to Claim 3, wherein the material from which the first layer is made is a rubber blend based on butyl rubber.

5. Process according to any one of the preceding claims, wherein the material from which the second layer is made is based on unsaturated diene elastomer.

6. Process according to either one of the Claims 1 and 2, wherein the material of the first and second layers is based on an EPDM.

7. Process according to any one of the preceding claims, wherein, after said vulcanized first layer has been placed in the impression of said second mould and before the non-vulcanized rubber second layer is placed in the internal cavity of said second mould, the surface of said vulcanized first layer is prepared.

8. Process according to Claim 7, wherein the surface is prepared by applying a film of solvent or by a plasma treatment or by removing an interlayer placed on the surface of the first layer before the vulcanization thereof.

9. Process according to any one of Claims 1 to 5, wherein, after said vulcanized first layer has been obtained, said vulcanized first layer is placed in the impression of said second mould and the non-vulcanized rubber second layer is placed in the internal cavity of said second mould in a short time preferably shorter than one hour.

10. Process according to any one of the preceding claims, wherein the rubber materials of the first and second layers are formed by injection moulding.

11. Process according to any one of Claims 1 to 10, wherein the rubber materials of the first and second layers are formed by over moulding.

12. Process according to any one of the preceding claims, wherein, after the vulcanized patch has been demoulded, a layer of non-vulcanized bonding rubber is added to the exterior surface of the second layer.

13. Process according to any one of Claims 1 to 11, wherein, after the vulcanized patch has been demoulded, an adhesive layer based on silanized polyether is added to the exterior surface of the second layer.

14. Rubber patch produced according to any one of the preceding claims, wherein the radiofrequency transponder comprises an electronic chip (71) and a radiating antenna (73) able to communicate with a radiofrequency reader.

15. Patch according to Claim 14, wherein, said radiating antenna comprising two helical antenna segments, said electronic chip is galvanically connected to said two helical antenna segments.

16. Patch according to Claim 14, wherein the radiofrequency transponder in addition comprises a primary antenna electrically connected to the electronic chip, wherein the primary antenna (24) is inductively coupled to the radiating antenna (10), and wherein the radiating antenna (10) is a dipole antenna consisting of a single-strand helical spring.

17. Tyre comprising a crown, two beads and two sidewalls, and a carcass ply anchored to said two beads, **characterized in that** a patch according to any one of Claims 14 to 16 is fastened to one of the walls of said tyre.

18. Tyre according to Claim 17, wherein the axis of the radiating antenna of the rubber patch is oriented normally to the reinforcers of the carcass ply.

19. Tyre according to Claim 17, wherein said rubber patch is fastened to a sidewall of said tyre.

20. Tyre according to Claim 17, wherein, the tyre comprising an interior layer, said rubber patch is fastened to the surface of said interior layer.

21. Tyre according to Claim 20, said tyre comprising a bead toe with an end on the side of the internal cavity of the tyre, said rubber patch is placed at a distance the curvilinear abscissa of which is greater than 60 mm and preferably between 70 mm and 110 mm from said end of the bead toe.
